**Europäisches Patentamt**

**European Patent Office**

**Office européen des brevets**

(19)

(11) Numéro de publication : **0 080 760
B1**

(12)

# FASCICULE DE BREVET EUROPÉEN

(45) Date de publication du fascicule du brevet :
20.02.85

(51) Int. Cl.⁴ : **C 04 B 7/46, C 04 B 7/44**

(21) Numéro de dépôt : **82201469.2**

(22) Date de dépôt : **19.11.82**

(54) Procédé de chauffage pour un four de cimenterie et installation pour le réaliser.

(30) Priorité : **26.11.81 EP 81201313**

(43) Date de publication de la demande :
**08.06.83 Bulletin 83/23**

(45) Mention de la délivrance du brevet :
**20.02.85 Bulletin 85/08**

(84) Etats contractants désignés :
**AT BE CH DE FR GB IT LI LU NL SE**

(56) Documents cités :
**EP-A- 0 026 145
DE-A- 2 230 590
CERAMIC ABSTRACTS, vol. 54, no. 516, mai-juin
1975, page 100, colonne de droite, g: F.P. GLASSER:
"Production and properties of some cements made
by plasma fusion".**

(73) Titulaire : **ATELIERS DE CONSTRUCTIONS ELECTRI-
QUES DE CHARLEROI (ACEC) Société Anonyme
Avenue Lloyd George 7
B-1050 Bruxelles (BE)**

(72) Inventeur : **Mariame, Philippe
Avenue Molière, 161
B-1060 Bruxelles (BE)**
Inventeur : **Becko, Yves
Boulevard Tirou, 203
B-6000 Charleroi (BE)**

(74) Mandataire : **Bossard, Franz et al
ACEC - Service des Brevets Boîte Postale 4
B-6000 Charleroi (BE)**

EP 0 080 760 B1

Jouve, 18, rue St-Denis, 75001 Paris, France

# Description

Le chauffage d'un four de cimenterie, en particulier d'un four rotatif, est en général réalisé au moyen d'un brûleur de combustible dans lequel un carburant liquide, gazeux ou solide pulvérisé est brûlé dans un léger excès d'air. Les gaz chauds de combustion sont ensuite envoyés, en général à contre-courant de la matière à clinkériser, à travers le four rotatif. Sur leur trajet, les gaz chauds rencontrent ainsi d'abord le clinker aux environs de 1 400 °C et finalement la matière crue sèche ou humide, suivant le cas, à des températures en dessous de 800 °C soit dans le four même soit dans une tour de préchauffe en amont de celui-ci par rapport au mouvement de la matière crue.

Il est aussi connu par exemple par la DE-A-2230590 de chauffer la matière à clinkériser au moyen d'un gaz appelé plasma, engendré par combustion et par adjonction d'une vapeur ionisante. Ce plasma est ensuite utilisé pour produire de l'énergie électrique. Il est à remarquer que dans ce procédé connu, les gaz chauds provenant de la combustion de mazout de méthane ou de charbon dans de l'air contiennent une très grande partie d'azote, c'est-à-dire environ trois quarts de la quantité totale des gaz chauds. Or, l'azote est un gaz qui n'absorbe ni n'émet de rayonnements infrarouges dans la partie du spectre qui correspond aux températures entre 800 et 2 500 °C de sorte que sa contribution au chauffage du clinker, qui se fait principalement par rayonnement, est très faible. Par contre, le dioxyde de carbone et la vapeur d'eau, présents ausi bien dans les gaz de combustion que dans les gaz qui résultent de la décomposition de la matière crue, possèdent des raies d'émission dans l'infrarouge et contribuent donc efficacement au chauffage du clinker, mais ces gaz ne constituent qu'un quart environ des gaz chauds de combustion.

L'invention a pour but d'utiliser pour le chauffage du four de cimenterie des gaz chauds à molécules dissymétriques à fort rayonnement infrarouge provenant de la décomposition de la matière crue et ce en l'absence de quantités sensibles d'air ou d'azote.

Le procédé de chauffage pour un four de cimenterie est caractérisé en ce qu'on recycle les gaz de décomposition de la matière crue et qu'on les envoie à travers un ensemble générateur de plasma électrique qui les porte à des températures sensiblement au-dessus de 1 400 °C et les projette sur la matière soumise à la clinkérisation.

Il est à remarquer que dans le procédé suivant l'invention le four de cimenterie n'est pas chauffé avec des gaz de combustion, mais avec des gaz tels que le dioxyde de carbone et la vapeur d'eau libérés lors de la décomposition de la matière crue.

Il est aussi connu, par exemple par la demande de brevet EP-A-26145 de chauffer la matière crue d'abord au moyen de gaz de combustion et d'achever le chauffage à haute température au moyen d'un four à plasma, mais il est évident que dans ce cas les gaz de chauffage contiennent une part très importante d'azote provenant de la combustion.

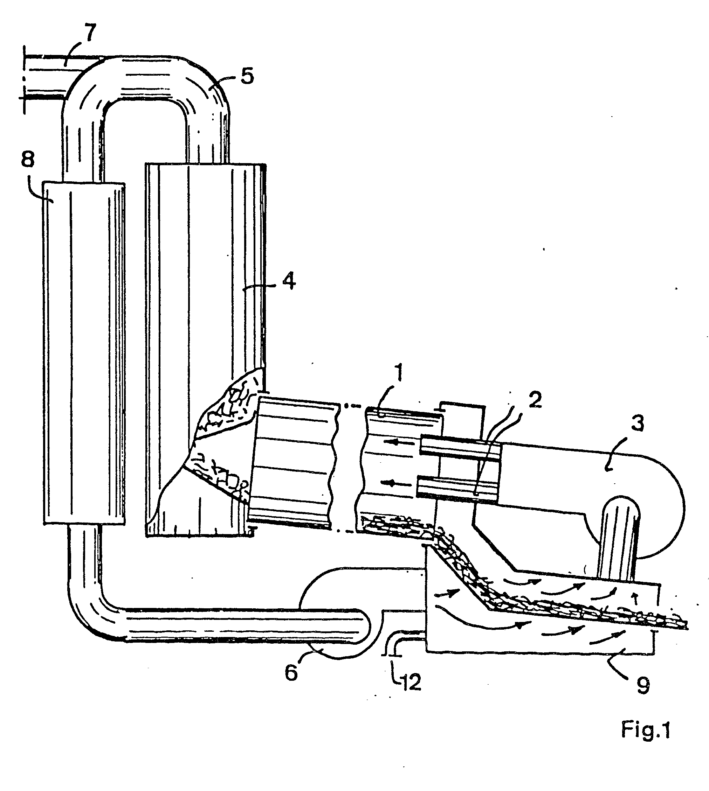

L'invention est expliquée ci-dessous par rapport à un exemple d'une forme d'exécution en se référant au dessin annexé. Les figures 1, 2 et 3 du dessin sont des vues schématiques d'installations suivant l'invention.

A la figure 1, un four rotatif 1 est alimenté par un ensemble de générateurs de plasma électriques 2 qui grâce à une soufflante 3 projette du gaz chaud à environ 2 000 °C sur de la matière à clinkériser qui descend dans le four 1. L'ensemble de générateurs 2 peut être constitué à la limite par un seul générateur comme décrit par exemple dans le brevet allemand DE-C3-1 245 509 ou par un ensemble de plusieurs de tels générateurs en parallèle. Le four 1 peut être alimenté en matière crue, humide ou sèche, par un dispositif d'alimentation approprié quelconque, par exemple une tour 4 de préchauffe, dans lequel les gaz sont récoltés au moins partiellement au moyen d'un conduit de recyclage 5. Les gaz récoltés dans le conduit 5 ne sont pas seulement les gaz chauffés dans l'ensemble des générateurs 2, mais comprennent en outre les produits de décomposition gazeuse des matières crues, c'est-à-dire surtout du dioxyde de carbone et de la vapeur d'eau, la proportion de vapeur d'eau étant particulièrement importante dans le cas où la matière crue est introduite sous forme humide. Une proportion importante de vapeur d'eau ne perturbe pas le transfert de chaleur par convection qui a lieu dans la partie amont du four. D'autre part, l'absence presque totale d'azote dans les gaz de chauffage et son remplacement par des gaz tel que le dioxyde de carbone et la vapeur d'eau augmente sensiblement l'échange de calories par rayonnement aux températures où a lieu la clinkérisation. De ce fait, le four rotatif peut être plus court et on peut y véhiculer un débit de matière première plus important.

Les gaz récoltés par le conduit 5 sont partiellement recyclés au moyen d'une soufflante 6 tandis que la partie de gaz non recyclée est envoyée à la cheminée via un conduit 7. La soufflante 6 envoie les gaz recyclés dans un refroidisseur à clinker. Elle peut être précédée ou suivie d'un appareil de filtrage ou séparation permettant d'éliminer des composants nuisibles à la qualité du produit final c'est-à-dire du ciment ou au moins d'un appareil de dépoussiérage 8 sommaire. Ce refroidisseur peut être constitué très simplement par un couloir d'évacuation 9 pour le clinker agencé de manière telle que le gaz fourni par la soufflante 6 traverse le clinker et récupère ainsi une partie de la chaleur qui y est emmagasinée. A la sortie de ce refroidisseur, en l'occurrence à l'endroit du couloir 9, le gaz recyclé est repris par la soufflante 3 et véhiculé à travers l'ensemble des générateurs 2 où il est porté à nouveau à une température d'environ 2 000 °C. Dans le cas d'un procédé en voie sèche, il est avantageux d'enrichir les gaz injectés dans le four de cimenterie 1 en vapeur d'eau pour y améliorer le transfert de chaleur par rayonnement. Cette vapeur d'eau peut être ajoutée en un endroit quelconque du circuit, par exemple dans le refroidisseur au moyen d'un conduit 12.

En principe, aucun autre gaz ne doit être ajouté. De ce fait, le gaz de chauffage reste composé principalement de dioxyde de carbone et de vapeur d'eau ce qui assure une transmission extrêmement efficace de la chaleur aussi bien lorsque celle-ci se fait par rayonnement que par convection.

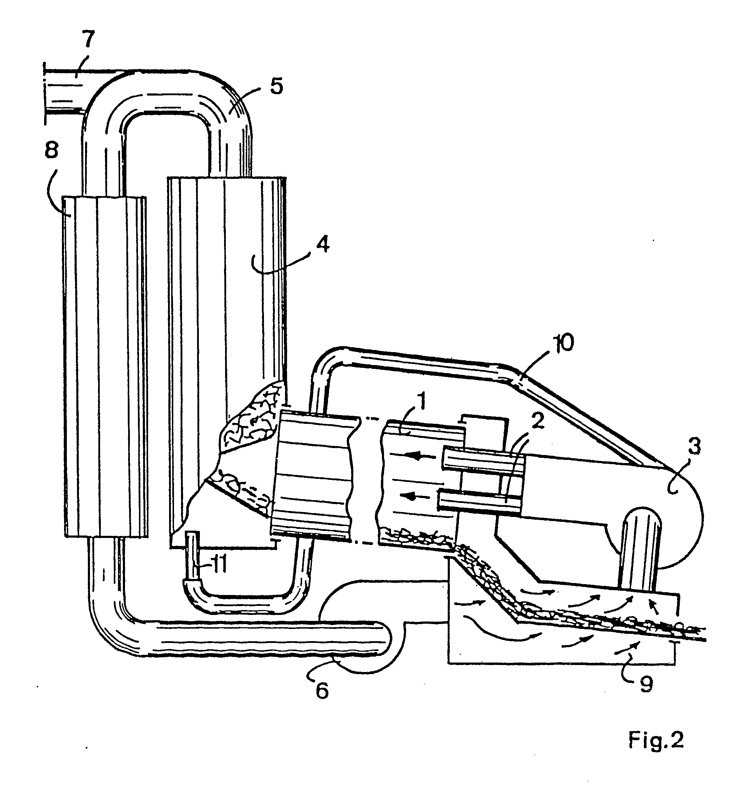

Dans une autre installation représentée schématiquement à la figure 2, le préchauffage dans la tour 4 vise en outre à réaliser une décarbonatation au moins partielle de la matière crue. Pour ce faire une conduite 10 reliée à la soufflante 3 ou à une soufflante séparée, non représentée, alimentée également par les gaz de recyclage réchauffés dans le couloir 9, amène du gaz à l'entrée d'un ensemble de générateurs de plasma 11 disposé au bas de la tour 4. Cet ensemble 11 permet d'obtenir dans cette tour la température nécessaire à la décarbonatation de la matière crue.

Dans le cas de procédés tels que décrits par rapport à des installations selon les figures 1 et 2 convenant au traitement de matières premières sèches, les gaz de recyclage sont constitués en très grande partie de dioxyde de carbone.

Le traitement de matières premières humides a lieu en général dans des installations sans tour de préchauffage, équipées d'un four rotatif très long, non représenté.

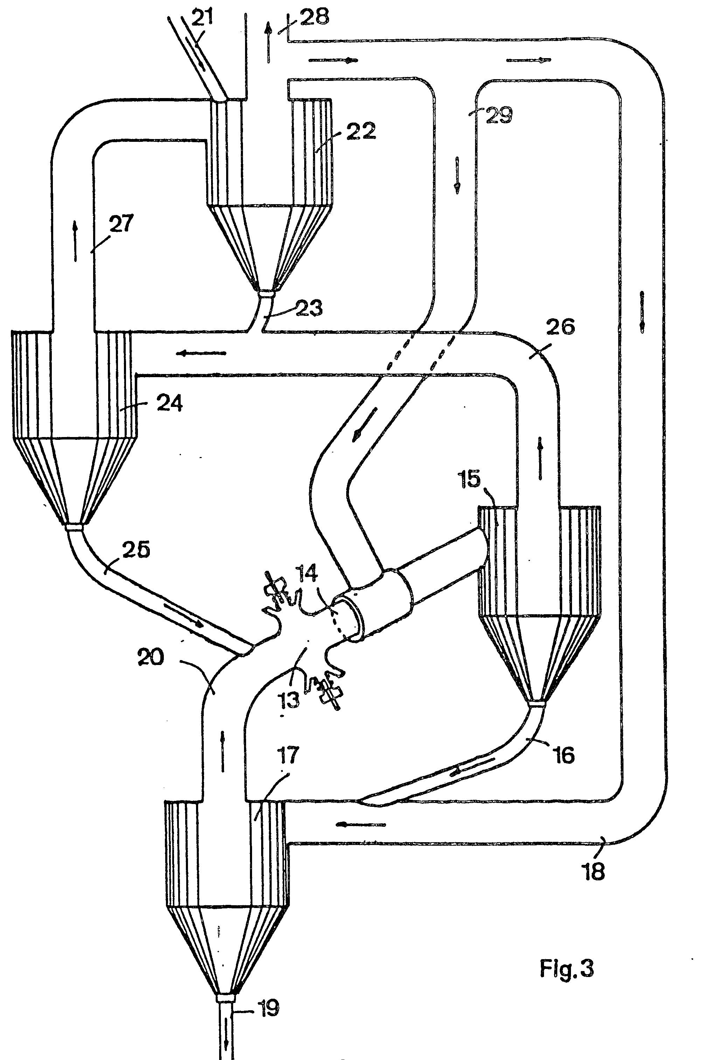

Une autre installation, sans four rotatif, est représentée à la figure 3. La réaction de clinkérisation est réalisée dans une chambre 13 de torche à plasma, dans un conduit 14 en aval de cette chambre 13 et, principalement dans un lit fluidisé ou entraîné 15 maintenu à une température au-dessus de 1 400 °C. Du lit fluidisé ou entraîné 15, le clinker est amené au moyen d'un conduit 16 à l'entrée d'un refroidisseur 17 alimenté en gaz froids par exemple des gaz à 200 °C amenés par un conduit 18.

Le refroidisseur 17 se termine par un conduit 19 par lequel le clinker peut être extrait à une basse température par exemple à 200 °C tandis que les gaz qui se sont échauffés au contact avec le clinker sont renvoyés à une température de par exemple 800 °C via un conduit 20 dans la chambre 13 de la torche à plasma.

La matière crue est introduite par un conduit 21 dans un premier préchauffeur 22 et passe ensuite à travers un conduit 23 dans un deuxième préchauffeur 24 dont elle sort à une température de par exemple 900 °C via un conduit 25 qui la mène dans la chambre 13 de la torche à plasma.

Le gaz servant au chauffage de la matière dans le deuxième préchauffeur 24 se trouve à une température de par exemple 1 200 °C et provient du lit fluidisé ou entraîné 15 dont il sort par un conduit 26. Le gaz quittant le deuxième préchauffeur 24 par un conduit 27 est amené dans le premier préchauffer 22 et le quitte ensuite en partie par une cheminée 28, en partie par un conduit 29 relié au conduit 14 et en partie par le conduit 18 relié au refroidisseur 17.

Il est bien visible qu'aucun apport d'air n'est prévu dans les installations décrites et que seulement l'excédent des gaz de décomposition est évacué par la cheminée 28 dans le cas de la figure 3 ou par la cheminée 7 dans les cas selon les figures 1 et 2.

Dans la réalisation suivant la figure 3 des soufflantes non représentées peuvent être prévues à tout endroit opportun, par exemple dans les conduits 18 et 29. Ces soufflantes peuvent servir aussi au dosage précis des quantités de gaz véhiculées par les conduits correspondants.

De même, il est possible de prévoir un appareil de filtrage ou de séparation et/ou de dépoussiérage à tout endroit opportun du circuit.

**Revendications**

1. Procédé de chauffage pour un four de cimenterie, caractérisé en ce qu'en l'absence d'un apport d'air on recycle les gaz de décomposition de la matière crue et qu'on les envoie à travers un ensemble générateur de plasma (2, 13) électrique qui les porte à des températures sensiblement au-dessus de 1 400 °C et qu'on les projette ainsi chauffées sur la matière soumise à la clinkérisation.

2. Procédé suivant la revendication 1, caractérisé en ce que les gaz recyclés sont envoyés à travers les produits clinkérisés sortant du four de cimenterie pour refroidir ces derniers en récupérant la chaleur qui y est emmagasinée avant d'être recyclés à travers l'ensemble des générateurs à plasma (2, 13).

3. Procédé suivant une des revendications précédentes caractérisé en ce qu'on envoie une partie de gaz recyclés à travers un préchauffeur en passant préalablement par un ensemble de générateurs de plasma électriques (11) qui porte leur température à une valeur suffisante pour réaliser la décarbonatation au moins partielle de la matière crue dans le préchauffeur.

4. Installation pour réaliser le procédé selon une des revendiations 1, 2 ou 3, caractérisée en ce qu'elle comprend des moyens (4, 26) pour récolter les gaz sortant du four de cimenterie (1, 14, 15), un conduit (5, 26, 27, 29, 18) amenant ces gaz récoltés dans un ensemble de générateurs de plasma électriques (2, 13) dont la sortie est reliée, le cas échéant, à l'extrémité du four de cimenterie (1) par laquelle sortent les produits clinkérisés.

5. Installation suivant la revendication 4, caractérisée en ce que le conduit 5 amène les gaz recyclés dans une soufflante 6 en amont d'un refroidisseur à clinker et en ce que les gaz sortant du refroidisseur à clinker sont repris par une soufflante (3) à l'entrée de l'ensemble générateur de plasma 2.

6. Installation suivant une des revendications 4 ou 5, caractérisée en ce que une partie des gaz recyclés est amenée à l'entrée d'un ensemble générateur de plasma électrique (11) disposé au bas d'une tour de préchauffe.

7. Installation suivant une des revendications 4, 5 ou 6, caractérisée en ce que le four de cimenterie est un lit fluidisé ou entraîné (15).

8. Installation suivant une des revendications 5 à 7 caractérisée en ce qu'elle comprend un appareil de filtrage ou séparation et/ou de dépoussiérage.

## Claims

1. Heating process for a cement oven, characterised in that, in the absence of an air supply, the decomposition gases from the raw material are recycled and passed through an electrical plasma generating unit (2, 13) which brings them to temperatures substantially above 1 400°C, and that they are projected thus heated on to the material subjected to clinkering.

2. Process according to claim 1, characterised in that the recycled gases are passed through the clinkered products issuing from the cement oven to cool these products, whilst recovering the heat stored therein, before being recycled through the unit of plasma generators (2, 13).

3. Process according to one of the preceding claims, characterised in that a portion of the recycled gases is passed through a preheater, passing first through a unit of electrical plasma generators (11) which takes their temperature to a value sufficient to effect the at least partial decarbonation of the raw material in the preheater.

4. Installation for carrying out the process according to one of claims 1, 2 or 3, characterised in that it comprises means (4, 26) for collecting the gases issuing from the cement oven (1, 14, 15), a conduit (5, 26, 27, 29, 18) bringing these collected gases into a unit of electrical plasma generators (2, 13) whose output side is connected if appropriate to the end of the cement oven (1) through which the clinkered products issue.

5. Installation according to claim 4, characterised in that the conduit 5 brings the recycled gases into a blower 6 upstream of a clinker cooling apparatus, and in that the gases issuing from the clinker cooling apparatus are taken up by a blower (3) at the inlet end of the plasma generating unit 2.

6. Installation according to one of claims 4 or 5, characterised in that a portion of the recycled gases is brought to the inlet of an electrical plasma generating unit (11) arranged at the bottom of a preheating tower.

7. Installation according to one of claims 4, 5 or 6, characterised in that the cement oven is a moving or fluidised bed (15).

8. Installation according to one of claims 5 to 7, characterised in that it comprises an apparatus for filtering or separating and/or dedusting.

## Ansprüche

1. Verfahren zum Beheizen eines Zementofens, dadurch gekennzeichnet, daß die Zersetzungsgase des rohen Materials ohne Luftzuführung zurückgeführt werden, und daß sie durch eine elektrische Plasmaerzeugungseinheit (2, 13) geschickt werden, die sie auf Temperaturen bringt, die wesentlich über 1 400 °C liegen, und daß sie in diesem erhitzten Zustand auf das zu brennende Material geblasen werden.

2. Verfahren gemäß Anspruch 1, dadurch gekennzeichnet, daß die zurückgeführten Gase durch die aus dem Zementofen herauskommenden gebrannten Produkte geleitet werden, um diese letzteren zu kühlen, wobei die darin gespeicherte Wärme zurückgewonnen wird, bevor diese Gase über die Plasmaerzeugungseinheit (2, 13) zurückgeführt werden.

3. Verfahren gemäß einem der vorhergehenden Ansprüche, dadurch gekennzeichnet, daß ein Teil der zurückgeführten Gase durch einen Vorerhitzer geschickt wird, wobei dise Gase zuvor durch eine Plasmaerzeugungseinheit (11) geleitet werden, in der ihre Temperatur so stark angehoben wird, daß eine zumindest teilweise Entziehung von Kohlendioxid bei dem rohen Material in dem Vorerhitzer erreicht wird.

4. Vorrichtung zur Verwirklichung des Verfahrens gemäß einem der Ansprüche 1, 2 oder 3, dadurch gekennzeichnet, daß sie Mittel (4, 26) zur Sammlung der aus dem Zementofen (1, 14, 15) austretenden Gase aufweist, und mit einer Leitung (5, 26, 27, 29, 18) ausgerüstet ist, die diese gesammelten Gase zu einer elektrischen Plasmaerzeugungseinheit (2, 13) führt, deren Ausgang gegebenenfalls mit dem Ende des Zementofens (1) verbunden ist, über das die gebrannten Produkte herausgeführt werden.

5. Vorrichtung gemäß Anspruch 4, dadurch gekennzeichnet, daß die zurückgeführten Gase über die Leitung 5 nach einem Gebläse 6 geleitet werden, das stromaufwärts von einem Klinkerkühler angeordnet ist, und daß die aus dem Klinkerkühler austretenden Gase von einem am Eingang der Plasmaerzeugungseinheit (2) angeordneten Gebläse (3) angesaugt werden.

6. Vorrichtung gemäß einem der Ansprüche 4 oder 5, dadurch gekennzeichnet, daß ein Teil der zurückgeführten Gase zu dem Eingang einer elektrischen Plasmaerzeugungseinheit (11) geleitet wird, die im unteren Teil eines Vorerhitzungsturms angeordnet ist.

7. Vorrichtung gemäß einem der Ansprüche 4, 5 oder 6, dadurch gekennzeichnet, daß der Zementofen aus einem Fließ- oder Wirbelbett (15) besteht.

8. Vorrichtung gemäß einem der Ansprüche 5 bis 7, dadurch gekennzeichnet, daß sie einen Filtrier- und Abscheideapparat, und/oder einen Entstaubungsapparat aufweist.

Fig.1

Fig.2

0 080 760

Fig.3